(19) Europäisches Patentamt
European Patent Office
Office européen des brevets

(11) **EP 4 166 684 A1**

(12) **DEMANDE DE BREVET EUROPEEN**

(43) Date de publication:
**19.04.2023 Bulletin 2023/16**

(21) Numéro de dépôt: **21202053.1**

(22) Date de dépôt: **12.10.2021**

(51) Classification Internationale des Brevets (IPC):
*C22C 29/06* (2006.01)       *C22C 29/08* (2006.01)
*G04B 37/22* (2006.01)       *B33Y 80/00* (2015.01)
*B22F 3/02* (2006.01)        *B22F 3/10* (2006.01)
*B22F 3/22* (2006.01)        *B22F 3/20* (2006.01)
*B22F 10/00* (2021.01)

(52) Classification Coopérative des Brevets (CPC):
(C-Sets disponibles)
**C22C 29/08; C22C 29/067; F16B 31/00;
G04B 13/02; G04B 17/063; G04B 19/042;
G04B 19/12; G04B 29/027; G04B 37/22;**
B22F 2998/10; B33Y 80/00          (Cont.)

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**
Etats d'extension désignés:
**BA ME**
Etats de validation désignés:
**KH MA MD TN**

(71) Demandeur: **The Swatch Group Research and
Development Ltd
2074 Marin (CH)**

(72) Inventeurs:
• **KISSLING, Gregory
2520 La Neuveville (CH)**
• **VINCENT, Denis
2000 Neuchâtel (CH)**
• **LAUPER, Stéphane
2016 Cortaillod (CH)**
• **BERTHEVILLE, Bernard
1950 Sion (CH)**

(74) Mandataire: **ICB SA
Faubourg de l'Hôpital, 3
2001 Neuchâtel (CH)**

(54) **ARTICLE EN CERMET PRECIEUX**

(57)     L'invention se rapporte à un article réalisé dans un matériau cermet comportant en poids entre 85 et 94% d'une phase céramique et entre 6 et 15% d'une phase d'un liant métallique, la phase céramique comportant majoritairement une phase de carbure de tungstène et optionnellement une ou plusieurs phases d'un ou plusieurs carbures secondaires choisis parmi les éléments Ti, Zr, Hf, V, Nb, Ta, Cr et Mo, le liant métallique comprenant de l'Ag, Pd, Ru et du Co.

L'invention se rapporte également au procédé de fabrication dudit article.

Fig. 2

**(Cont. page suivante)**

(52) Classification Coopérative des Brevets (CPC):
(Cont.)

C-Sets
B22F 2998/10, C22C 1/05, B22F 3/02, B22F 3/10;
B22F 2998/10, C22C 1/05, B22F 3/20, B22F 3/10;
B22F 2998/10, C22C 1/05, B22F 3/225,
B22F 3/10;
B22F 2998/10, C22C 1/05, B22F 10/00,
B22F 3/10

**Description**

DOMAINE TECHNIQUE

La présente invention se rapporte à un article, notamment à un article décoratif, et plus spécifiquement à un composant horloger, réalisé dans un matériau de type cermet amagnétique. Cet article comporte une phase céramique avec majoritairement des carbures de tungstène et un liant métallique comportant plusieurs éléments précieux.

ART ANTERIEUR

Les cermets contiennent généralement un liant métallique comme le nickel ou le cobalt qui présentent l'inconvénient de posséder un ferromagnétisme résiduel non négligeable pour des applications dans le domaine horloger. Il devient de plus en plus nécessaire de limiter ou d'éliminer complètement ce ferromagnétisme afin de garantir un fonctionnement le plus précis possible des montres, notamment mécaniques. Il est donc impératif de développer des nouveaux cermets s'affranchissant de toute utilisation de liants ferromagnétiques ou diamagnétiques.

En outre, les cermets utilisés pour des applications spécifiques telles que des lunettes ou plus généralement des boîtes de montre doivent présenter une très bonne résistance aux rayures, c.à.d. une dureté supérieure à 1000 Vickers. Cela nécessite alors de réduire la quantité de liant métallique tout en contrôlant la mouillabilité entre ledit liant métallique et la phase céramique, une mauvaise mouillabilité se traduisant par une baisse de la densité sur le produit final et par là-même de la dureté.

Outre l'absence de ferromagnétisme ou de diamagnétisme et les duretés élevées requises, la ténacité est une propriété importante dans le domaine horloger. A cela s'ajoute l'esthétisme qui est crucial pour les composants horlogers d'habillage. En particulier, l'éclat métallique du composant est un aspect esthétique sur lequel une attention particulière est portée.

RESUME DE L'INVENTION

La présente invention a pour objet de pallier aux désavantages précités en proposant un article réalisé dans un matériau de type cermet, avec une composition et un procédé de fabrication optimisés pour remplir les critères suivants :

-    s'affranchir de tout ferromagnétisme ou de diamagnétisme,

-    présenter une susceptibilité magnétique $\chi$m faible, inférieure à 5x10-5,

-    avoir un éclat métallique élevé soit un indice de luminance L* minimum de 65 et plus préférentiellement minimum de 70 pour des applications d'habillages horlogers,

-    pouvoir notamment être densifié par frittage en phase liquide, sous pression atmosphérique, sous vide ou sous pression partielle de gaz,

-    avoir une dureté Vickers minimum de 500, de préférence minimum de 700 et plus préférentiellement minimum de 1000 HV30 pour une application nécessitant une très bonne résistance aux rayures, tout en ayant une ténacité suffisante avec, de préférence, un Kic supérieur ou égal à 4 MPa.m1/2,

A cette fin, la présente invention propose un article réalisé dans un matériau cermet comportant en poids entre 85 et 94% d'une phase céramique comportant majoritairement des carbures de tungstène et entre 6 et 15% d'une phase d'un liant métallique comprenant plusieurs métaux dont des métaux précieux.

Plus précisément, ledit matériau cermet comprend l'élément cobalt entre 0.02 et 4% en poids, l'élément ruthénium entre 0.02 et 4% en poids, l'élément palladium entre 0.5 et 4% en poids et l'élément argent entre 5 et 14% en poids. En d'autres mots, ledit matériau cermet est constitué, aux impuretés près, de l'élément cobalt entre 0.02 et 4% en poids, de l'élément ruthénium entre 0.02 et 4% en poids, de l'élément palladium entre 0.5 et 4% en poids et de l'élément argent entre 5 et 14% en poids.

Préférentiellement, ledit matériau cermet est constitué, aux impuretés près, de l'élément cobalt entre 0.02 et 3% en poids, de l'élément ruthénium entre 0.02 et 3% en poids, de l'élément palladium entre 0.5 et 3% en poids et de l'élément argent entre 7 et 13.4% en poids.

Encore plus préférentiellement, ledit matériau cermet est constitué, aux impuretés près, de l'élément cobalt entre 0.03 et 2% en poids, de l'élément ruthénium entre 0.03 et 2% en poids, de l'élément palladium entre 0.5 et 2% en poids et de l'élément argent entre 7 et 10% en poids.

L'argent est utilisé majoritairement dans le liant compte tenu de son faible coût et de sa miscibilité avec les éléments cobalt, ruthénium et palladium. Le palladium est principalement ajouté pour éviter un ternissement ou une oxydation à l'air de l'argent tout en ayant comme autre avantage de ne pas présenter de ferromagnétisme. Il permet également d'augmenter la résistance à la corrosion.

Les éléments cobalt et ruthénium sont incorporés en faibles quantités afin en plus d'améliorer la densification lors du frittage compte tenu qu'ils sont tous deux miscibles dans l'argent tout en améliorant la mouillabilité avec les grains de carbure de tungstène. Ils permettent donc avantageusement d'améliorer la densification.

Le matériau cermet ainsi développé ne possède pas de composante ferromagnétique ou diamagnétique, et présente après polissage un éclat métallique comparable à celui observé dans des aciers inoxydables. Ces cermets précieux présentent pour autre avantage d'être dépourvu de nickel qui est connu comme étant un élément hautement allergène. Ils possèdent également des duretés élevées et des ténacités suffisantes pour la réalisation de composants d'habillage et de pièces fonctionnelles. En outre, ils peuvent être élaborés par des procédés classiques de fabrication de matériaux massifs comme par coulée, ou par métallurgie des poudres afin d'obtenir des pièces tridimensionnelles mises en forme par pressage ou par injection ou par extrusion ou par divers autres procédés de fabrications additives comme par exemple l'impression 3D.

Des pièces de forme donc plus ou moins complexe peuvent être finalement consolidées à des températures comprises entre 1100 et 1500°C, sous pression atmosphérique, sous vide ou sous pression partielle de gaz, c.à.d. sans recourir à des pressions importantes.

D'autres caractéristiques et avantages de la présente invention apparaîtront dans la description suivante d'un mode de réalisation préféré, présenté à titre d'exemple non limitatif en référence aux dessins annexés.

BREVE DESCRIPTION DES FIGURES

La figure 1 représente deux images en microscopie optique et électronique respectivement du matériau de type cermet selon l'invention avec une composition en poids de 90% de WC et de 10% d'un liant précieux constitué de 89% d'Ag, de 10% de Pd, de 0.5% de Ru et de 0.5% de Co, soit par rapport au poids total 8.9% d'Ag, 1% de Pd, 0.05% de Ru et 0.05% de Co.

La figure 2 représente le comportement paramagnétique de ce même matériau de type de cermet présentant une susceptibilité magnétique $\chi m$ de $1.2 \times 10^{-5}$.

DESCRIPTION DETAILLEE

La présente invention se rapporte à un article réalisé dans un matériau de type cermet comportant une phase céramique constituée de carbures et d'une phase d'un liant constitué de plusieurs métaux dont des métaux précieux. Le cermet comporte en poids entre 85 et 94% de la phase céramique et entre 6 et 15% de la phase du liant métallique. Préférentiellement, le cermet comporte en poids entre 86 et 93% de la phase céramique et entre 7 et 14% de la phase du liant métallique précieux. Préférentiellement, le cermet comporte en poids entre 87 et 92% de la phase céramique et entre 8 et 13% de la phase du liant métallique précieux. Encore plus préférentiellement le cermet comporte en poids entre 89 et 91% de la phase céramique et en poids entre 9 et 11% de la phase du liant métallique précieux.

Le liant métallique comprend de l'argent, du palladium, du ruthénium et du cobalt. De préférence, le liant métallique est constitué, aux impuretés près, d'argent, de palladium, de ruthénium et de cobalt. Par rapport au poids total, le cobalt et le ruthénium sont chacun présents dans un pourcentage compris entre 0.02 et 4% en poids. De préférence, le cobalt et le ruthénium sont chacun présents dans un pourcentage compris entre 0.02 et 3%, plus préférentiellement entre 0.03 et 2% en poids, encore plus préférentiellement entre 0.03 et 1%, encore plus préférentiellement entre 0.03 et 0.5% et de manière particulièrement préférée entre 0.03 et 0.4%. Par rapport au poids total, le palladium est compris entre 0.5 et 4% et l'argent entre 5 et 14%. De préférence, le palladium est compris entre 0.5 et 3%, plus préférentiellement, le palladium est compris entre 0.5 et 2%, et encore plus préférentiellement entre 0.5 et 1.5%. De préférence, l'argent est compris entre 7 et 13.4% et plus préférentiellement entre 7 et 10% en poids.

La phase céramique comprend une phase majoritaire de carbure de tungstène et optionnellement une ou plusieurs phases de carbure d'un élément ou de plusieurs éléments choisis parmi le Ti, Zr, Hf, V, Nb, Ta, Cr et Mo. En d'autres mots, la phase céramique est constituée soit d'une seule phase de carbure de tungstène, soit d'une phase majoritaire de carbure de tungstène additionnée d'une ou plusieurs phases respectivement d'un ou plusieurs de carbures de Ti, Zr, Hf, V, Nb, Ta, Cr et Mo, cette ou ces phases de carbures de Ti, Zr, Hf, V, Nb, Ta, Cr et Mo étant présente dans une proportion minoritaire. On entend par majoritaire un pourcentage supérieur à 50% en poids, de préférence supérieur ou égal à 65%, plus préférentiellement supérieur ou égal à 75%. En résumé, au sein de la phase céramique, la phase de carbure de tungstène est présente dans un pourcentage en poids supérieur à 50% et inférieur ou égal à 100% ($50 < WC \leq 100\%$), de préférence supérieur ou égal à 65% et inférieur ou égal à 100% ($65 \leq WC \leq 100\%$), plus

préférentiellement supérieur ou égal à 75% et inférieur ou égal à 100% (75 ≤ WC ≤ 100%) avec le complément formé du ou des autres carbures de Ti, Zr, Hf, V, Nb, Ta, Cr et Mo.

Selon l'invention, ce matériau de type cermet est amagnétique. Pour la suite de cette description, la mention de « amagnétique » pour ce matériau de type cermet se réfère à un matériau uniquement paramagnétique et présentant une très faible susceptibilité magnétique. Il est bien connu que dans un diagramme de phase, la température de Curie indique la température de transition d'un état ferromagnétique à un état paramagnétique, à une température donnée et pour une composition fixée. Ainsi, pour le diagramme de phase Cobalt-Ruthénium, cette transition magnétique intervient à la température ambiante pour une concentration massique Ruthénium située entre 45% et 50%. De la même manière, il est possible de déterminer dans le diagramme de phase Cobalt-Palladium une transition paramagnétique situé entre 4% et 6% en poids de cobalt, à la même température ambiante. En respectant les deux limites énoncées cidessus, il est alors possible d'avoir une transition paramagnétique dans le système ternaire Palladium-Cobalt-Ruthénium. Le matériau de type cermet à liant précieux constitué des éléments palladium, cobalt, ruthénium selon les limites des compositions définies et d'argent est donc paramagnétique.

L'article peut être un élément constitutif de montres, bijoux, bracelets, etc. Dans le domaine horloger, cet article peut être une pièce d'habillage telle qu'une carrure, un fond, une lunette, un poussoir, un maillon de bracelet, un cadran, une aiguille, un index de cadran, etc. Il peut également s'agir d'un composant du mouvement choisi parmi la liste non exhaustive comprenant une roue dentée, un axe, un pignon, un ressort, un pont, une platine, une vis et un balancier. Avantageusement, au sein des composants du mouvement, il s'agit d'un axe de balancier.

L'article en cermet peut être mis en forme par des procédés classiques de métallurgie des poudres tels que le pressage ou l'injection ou l'extrusion ou par divers procédés de fabrication additive dédiés à la fabrication de pièces tridimensionnelles comme la fusion sélective par laser (SLM), la fusion sélective par faisceau d'électrons (SEBM), comme l'impression 3D (3DP), l'impression 3D par jet de liant (BJAD), l'impression 3D par gel (3DGP) et la fabrication par filament fondu (FFF).

L'article en cermet est préférentiellement réalisé par frittage en partant d'un mélange des poudres céramique et métallique. Le procédé de fabrication comporte les étapes suivantes:

a) Réaliser un mélange avec les différentes poudres et ce éventuellement en milieu humide. Les poudres de départ ont préférentiellement un d50 inférieur à 10 μm, et plus préférentiellement compris entre 0.8 et 5 μm. Le mélange peut éventuellement être réalisé dans un broyeur, ce qui réduit le d50 des particules de la poudre à une taille de l'ordre du micron, voire inférieure au micron après broyage. Ce mélange comporte en poids entre 85 et 94%, de préférence entre 86 et 93%, plus préférentiellement entre 89 et 91%, de la poudre céramique et entre 6 et 15%, de préférence entre 7 et 14%, plus préférentiellement entre 9 et 11% de la poudre métallique. La poudre céramique comporte du carbure de tungstène et optionnellement un ou plusieurs autres carbures. La poudre métallique est constituée uniquement des éléments argent, palladium, ruthénium et cobalt. Le cermet ainsi réalisé comporte donc en poids total de 5 à 14% d'argent, de préférence entre 7 et 13.4% d'argent, plus préférentiellement entre 7 et 10% d'argent. Il comporte aussi en poids total de 0.5 à 4% de palladium, de préférence entre 0.5 et 3% de palladium, plus préférentiellement entre 0.5 et 2% de palladium, et encore plus préférentiellement entre 0.5 et 1.5% de palladium. Ce cermet comporte aussi du ruthénium et du cobalt avec une teneur en poids pour chacun comprise entre 0.02 à 4%, de préférence entre 0.02 et 3%, plus préférentiellement entre 0.03 et 2%, et encore plus préférentiellement entre 0.03 et 1%, entre 0.03 et 0.5% et entre 0.03 et 0.4%. On précisera pour cette étape que la phase métallique peut aussi être fabriquée par fusion à l'arc puis être atomisée sous forme de poudres pré-alliées pour finalement être mélangée avec les poudres de carbures.

b) Eventuellement, un deuxième mélange comprenant le mélange précité et un système de liant organique (paraffine, polyéthylène, etc.) peut être réalisé.

c) Former une ébauche en conférant au mélange la forme de l'article désiré, par exemple, par injection, par pressage, par extrusion ou par impression 3D.

d) Fritter l'ébauche sous atmosphère inerte ou sous azote ou sous vide à une température comprise entre 950°C et 1600°C, de préférence entre 1000°C et 1500°C, et plus préférentiellement entre 1100 et 1500°C, pendant une période comprise entre 15 minutes et 8 heures, de préférence entre 30 minutes et 4 heures, et plus préférentiellement entre 30 minutes et 2 heures. Cette étape peut être précédée d'une étape de déliantage dans une gamme de températures comprise entre 200 et 800°C si le mélange comporte un système de liants organiques.

L'ébauche ainsi obtenue est refroidie et polie. Elle peut également être usinée avant polissage pour obtenir l'article désiré.

L'article issu du procédé de fabrication comporte la phase céramique et la phase métallique dans des pourcentages en poids proches de ceux des poudres de départ. On ne peut cependant exclure des petites variations de compositions et de pourcentages entre les poudres de base et le matériau issu du frittage, en fonction notamment des différentes pressions de vapeur des éléments constitutifs du liant métallique avec la température.

L'article a un espace colorimétrique CIELAB (conforme aux normes CIE n°15, ISO 7724/1, DIN 5033 Teil 7, ASTM E-1164) avec une composante de luminance L*, représentative de la manière dont le matériau réfléchit la lumière, de minimum 60, de préférence de minimum 65 et plus préférentiellement de minimum 70.

Le matériau cermet a une dureté Vickers mesurée sous charge de 30kg (HV30) comprise entre 500 et 1600, de préférence entre 700 et 1400, en fonction des types et des pourcentages des constituants. Avantageusement, il a une dureté supérieure à 1000 Vickers pour les pièces d'habillage nécessitant une résistance élevée aux rayures. Il a une ténacité $K_ic$ de minimum 3 MPa.m$^{1/2}$, préférentiellement de minimum 4.0 MPa.m$^{1/2}$, la ténacité étant déterminée sur base des mesures des longueurs des fissures aux quatre extrémités des diagonales de l'empreinte de dureté selon

la formule : $K_{1C} = 0.0319 \dfrac{P}{a l^{1/2}}$ avec P qui est la charge appliquée (N), a qui est la demi-diagonale (m) et / qui est la longueur de la fissure mesurée (m).

Pour les propriétés magnétiques, la courbe d'hystérèse M(H) a été caractérisée à température ambiante et en faisant varier le champ appliqué sur les échantillons avec un magnétomètre à échantillon vibrant (VSM) de type Micro-Sense EZ9. La susceptibilité magnétique ($\chi$m) par unité de volume du cermet selon l'invention est inférieure à $5 \times 10^{-5}$, de préférence inférieure ou égale à $4 \times 10^{-5}$.

Le tableau 1 ci-après reprend plusieurs exemples de matériaux de type cermet avec un exemple comparatif sans cobalt (échantillon 01) et deux exemples selon l'invention (échantillons 02 et 03). Dans les exemples, la phase céramique est une phase de carbure de tungstène avec un pourcentage en poids de 90%. Le liant métallique est donc présent dans un pourcentage en poids de 10% avec les compositions données dans le tableau.

Les échantillons ont tous été fabriqués par métallurgie des poudres. Les mélanges de poudres de compositions distinctes ont été préparés dans un broyeur en présence d'un solvant. Les mélanges ont été réalisés sans ajouts de liants organiques. Après séchage, ils ont été mis en forme par pression uniaxiale et frittés sous argon et à la même température. Après frittage, les échantillons ont été polis plans afin de mesurer précisément les propriétés mécaniques et les indices de colorimétrie.

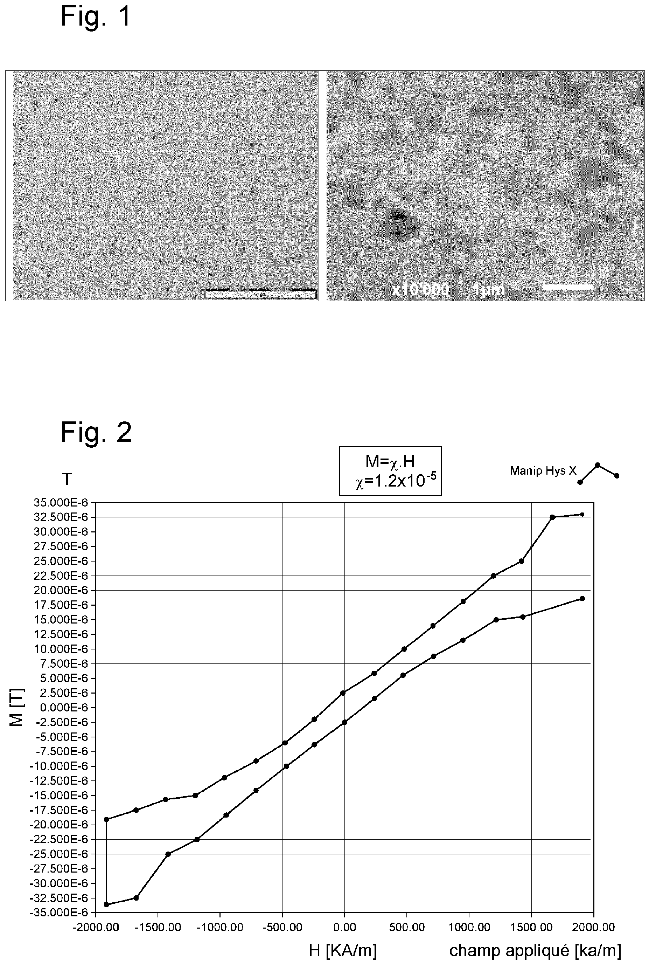

Pour l'échantillon 01, une faible valeur de dureté inférieure à 350 HV30 est obtenue. Elle est attribuée à la présence importante de porosité dans l'échantillon en l'absence de cobalt. L'ajout de cobalt dans l'échantillon 02 permet d'améliorer la densification lors du frittage et par là-même d'augmenter drastiquement la dureté avec une valeur supérieure ou égale à 800 HV30. La réduction des teneurs en cobalt et ruthénium dans l'échantillon 03 permet de réduire la valeur de susceptibilité magnétique par unité de volume à une valeur de $1.2 \times 10^{-5}$ avec la courbe d'hystérèse visible à la figure 2. Cela en fait un cermet de choix pour un composant horloger du mouvement tel qu'un axe de balancier. L'échantillon 03 est par ailleurs bien densifié avec très peu de porosités ayant des tailles d'environ 1 micron comme le montrent les photos prises en microscopie optique et en microscopie électronique de la figure 1 avec sur la microscopie optique les points noirs qui sont des porosités. Il en résulte une hausse de la dureté avec une valeur atteignant 1208 HV30. Tous les échantillons selon l'invention entrent dans les critères fixés pour un composant horloger ne présentant pas de propriétés ferromagnétiques et pas de propriétés diamagnétiques, avec une ténacité supérieure à 4.0 MPa.m$^{1/2}$, avec une dureté supérieure à 700 HV30 et présentant un éclat métallique élevé avec une valeur L* supérieure à 70.

Tableau 1

| | | Ag (%pds) | Pd (%pds) | Ru (%pds) | Co (%pds) | $\chi_m$ (unité/Vol.) | type | Dureté (HV30) | K1c (Mpa.m$^{1/2}$) | L* |
|----|------|------|------|------|------|------------------|------|------|------|------|
| 01 | Comp | 87.1 | 10.0 | 2.9 | - | $4.0 \times 10^{-5}$ | Para | 309 | 4.8 | 68.6 |
| **02** | **Inv** | **85.0** | **10.0** | **2.5** | **2.5** | **$3.4 \times 10^{-5}$** | **Para** | **830** | **5.4** | **72.6** |
| **03** | **Inv** | **89.0** | **10.0** | **0.5** | **0.5** | **$1.2 \times 10^{-5}$** | **Para** | **1208** | **4.8** | **74.5** |

**Revendications**

**1.** Article réalisé dans un matériau cermet comportant en poids entre 85 et 94% d'une phase céramique et entre 6 et 15% d'une phase d'un liant métallique, la phase céramique comportant majoritairement une phase de carbure de tungstène et optionnellement une ou plusieurs phases d'un ou plusieurs carbures choisis parmi les éléments Ti, Zr, Hf, V, Nb, Ta, Cr et Mo, le liant métallique comprenant de l'Ag, Pd, Ru et du Co.

**2.** Article selon la revendication 1, **caractérisé en ce que** la phase du liant métallique est présente dans un pourcentage en poids compris entre 7 et 14% et **en ce que** la phase céramique est présente dans un pourcentage en poids compris entre 86 et 93%.

**3.** Article selon la revendication 1 ou 2, **caractérisé en ce que** la phase du liant métallique est présente dans un pourcentage en poids compris entre 9 et 11% et **en ce que** la phase céramique est présente dans un pourcentage en poids compris entre 89 et 91%.

**4.** Article selon l'une des revendications précédentes, **caractérisé en ce que** la phase de carbure comporte uniquement du carbure de tungstène.

**5.** Article selon l'une des revendications précédentes, **caractérisé en ce que** la phase du liant métallique est constituée, aux impuretés près, d'Ag, de Pd, de Ru et de Co.

**6.** Article selon l'une des revendications précédentes, **caractérisé en ce que** l'Ag a une teneur comprise entre 5 et 14%, de préférence entre 7 et 13.4% et plus préférentiellement entre 7 et 10% en poids.

**7.** Article selon l'une des revendications précédentes, **caractérisé en ce que** le Pd a une teneur comprise entre 0.5 et 4% en poids, de préférence entre 0.5 et 3% en poids, plus préférentiellement entre 0.5 et 2%, et encore plus préférentiellement entre 0.5 et 1.5%.

**8.** Article selon l'une des revendications précédentes, **caractérisé en ce que** le Co et le Ru sont chacun présents dans un pourcentage compris entre 0.02 et 4%, de préférence entre 0.02 et 3%, plus préférentiellement entre 0.03 et 2%, encore plus préférentiellement entre 0.03 et 0.5% et encore plus préférentiellement entre 0.03 et 0.4%.

**9.** Article selon l'une des revendications précédentes, **caractérisé en ce qu'**il a une dureté Vickers, HV30, comprise entre 500 et 1600, de préférence entre 700 et 1400.

**10.** Article selon l'une des revendications précédentes, **caractérisé en ce qu'**il a une ténacité KiC supérieure ou égale à 3.0 MPa.m1/2, de préférence supérieure ou égale à 4.0 MPa.m1/2.

**11.** Article selon l'une des revendications précédentes, **caractérisé en ce qu'**il a, dans un espace colorimétrique CIELAB, une composante L* de minimum 60, de préférence de minimum 65 et plus préférentiellement de minimum 70.

**12.** Article selon l'une des revendications précédentes, **caractérisé en ce que** le matériau cermet est amagnétique avec une susceptibilité magnétique $\chi$m par unité de volume inférieure à 5x10-5.

**13.** Article selon l'une des revendications précédentes, **caractérisé en ce qu'**il s'agit d'un composant horloger d'habillage choisi parmi la liste comprenant une carrure, un fond, une lunette, un poussoir, un maillon de bracelet, un cadran, une aiguille et un index de cadran.

**14.** Article selon l'une des revendications, **caractérisé en ce qu'**il s'agit d'un composant horloger du mouvement choisi parmi la liste comprenant une roue dentée, un axe, un pignon, un ressort, un pont, une platine, une vis et un balancier.

**15.** Article selon l'une des revendications précédentes, **caractérisé en ce qu'**il s'agit d'un axe du balancier.

**16.** Procédé de fabrication d'un article comprenant les étapes successives suivantes :

a) Réaliser un mélange avec une poudre céramique comprenant majoritairement du carbure de tungstène et une poudre d'un liant métallique constitué, aux impuretés près, d'argent, de palladium, de ruthénium et de cobalt,
b) Former une ébauche en conférant audit mélange la forme de l'article,
c) Fritter l'ébauche à une température comprise entre 950 et 1600°C, de préférence entre 1100 et 1500°C, pendant une période comprise entre 15 minutes et 8 heures, de préférence entre 30 minutes et 4 heures, le procédé étant **caractérisé en ce que** la poudre céramique est présente dans un pourcentage en poids compris entre 85 et 94%, de préférence entre 86 et 93%, plus préférentiellement entre 89 et 91% et **en ce que** la poudre du liant métallique est présente dans un pourcentage en poids compris entre 6 et 15%, de préférence entre 7 et 14%, plus préférentiellement entre 9 et 11%.

**17.** Procédé selon la revendication 16, **caractérisé en ce que** l'étape b) est réalisée par pressage, par injection, par extrusion ou par des procédés de fabrication additive.

## Fig. 1

## Fig. 2

**EP 4 166 684 A1**

Europäisches
Patentamt

European
Patent Office

Office européen
des brevets

# RAPPORT DE RECHERCHE EUROPEENNE

Numéro de la demande

**EP 21 20 2053**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 2012/304694 A1 (DERRIG ANDREW [US]) 6 décembre 2012 (2012-12-06) * exemple 3 * * alinéa [0153] * ----- | 1-17 | INV. C22C29/06 C22C29/08 G04B37/22 |
| X | US 6 514 456 B1 (LACKNER ANDREAS [AT] ET AL) 4 février 2003 (2003-02-04) | 1-12,16, 17 | ADD. B33Y80/00 |
| A | * revendication 1 * * colonne 5, ligne 38 - ligne 46 * ----- | 13-15 | B22F3/02 B22F3/10 B22F3/22 |
| A | US 2017/119114 A1 (DERRIG ANDREW [US]) 4 mai 2017 (2017-05-04) * le document en entier * ----- | 1-17 | B22F3/20 B22F10/00 |

DOMAINES TECHNIQUES RECHERCHES (IPC)

C22C
B22F
B33Y
G04F
G04B

Le présent rapport a été établi pour toutes les revendications

| Lieu de la recherche | Date d'achèvement de la recherche | Examinateur |
|---|---|---|
| La Haye | 24 mars 2022 | Morra, Valentina |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

..........................................................................................
& : membre de la même famille, document correspondant

EPO FORM 1503 03.82 (P04C02)

10

## ANNEXE AU RAPPORT DE RECHERCHE EUROPEENNE
## RELATIF A LA DEMANDE DE BREVET EUROPEEN NO.

EP 21 20 2053

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

24-03-2022

| Document brevet cité au rapport de recherche | Date de publication | Membre(s) de la famille de brevet(s) | Date de publication |
|---|---|---|---|
| US 2012304694 A1 | 06-12-2012 | US 2012304694 A1<br>WO 2012167080 A1 | 06-12-2012<br>06-12-2012 |
| US 6514456 B1 | 04-02-2003 | AT 3738 U1<br>AT 275211 T<br>EP 1092786 A2<br>ES 2225019 T3<br>PT 1092786 E<br>US 6514456 B1 | 25-07-2000<br>15-09-2004<br>18-04-2001<br>16-03-2005<br>31-01-2005<br>04-02-2003 |
| US 2017119114 A1 | 04-05-2017 | AUCUN | |

EPO FORM P0460

Pour tout renseignement concernant cette annexe : voir Journal Officiel de l'Office européen des brevets, No.12/82